# EUROPÄISCHE PATENTSCHRIFT

(11) **EP 3 236 268 B1**
(45) Veröffentlichungstag und Bekanntmachung des Hinweises auf die Patenterteilung: **11.10.2023**
(21) Anmeldenummer: 16166314.1
(22) Anmeldetag: 21.04.2016
(51) Int. Cl.: G01N 35/04, G01N 35/10, G01N 35/00

(54) **VERFAHREN ZUR OPTIMIERTEN BESTÜCKUNG EINER AUFNAHMEVORRICHTUNG MIT FLÜSSIGKEITSBEHÄLTERN**
METHOD FOR OPTIMIZED SETTING OF INSERTS IN A RECEIVING DEVICE WITH LIQUID CONTAINERS
PROCEDE DE GARNISSAGE OPTIMISE D'UN DISPOSITIF DE RECEPTION COMPRENANT DES RECIPIENTS DE LIQUIDE

(43) Veröffentlichungstag der Anmeldung: 25.10.2017
(73) Patentinhaber: Siemens Healthcare Diagnostics Products GmbH, 35041 Marburg (DE)
(72) Erfinder: Korn, Matthias, 56355 Nastaetten (DE); Rauch, Till, 65760 Eschborn am Taunus (DE)

(56) Entgegenhaltungen:
- WO-A1-99/42841
- US-A1- 2014 308 661

## Beschreibung

Die Erfindung betrifft ein optimiertes Verfahren zur sukzessiven Bestückung einer Vielzahl von Aufnahmepositionen mit Flüssigkeitsbehältern in einem automatischen Analysegerät.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Um einen möglichst hohen Probendurchsatz zu erzielen, also um eine Vielzahl von Nachweisreaktionen und Analysen mit einer Vielzahl von Proben in möglichst kurzer Zeit durchführen zu können, sind die verschiedenen Baugruppen moderner Analysegeräte üblicherweise so ausgestaltet, dass sie eine Vielzahl von Flüssigkeitsbehältern aufnehmen können. Es sind zum Beispiel Inkubationseinrichtungen vorgesehen, in die eine Vielzahl, beispielsweise 20-100, Reaktionsgefäße eingesetzt werden können. Für die Analyse einer Probe wird mit Hilfe einer automatischen Pipettiervorrichtung ein Teilvolumen aus einem Primärprobengefäß, beispielsweise aus einem Blutentnahmeröhrchen, entnommen und in ein in der Inkubationseinrichtung enthaltenes Reaktionsgefäß transferiert. Mit einer oder mehreren weiteren Pipettiervorrichtungen werden eine oder mehrere Reagenzflüssigkeiten in das Reaktionsgefäß abgegeben und mit der Probe vermischt. Auf diese Weise kann eine Vielzahl von Analysen gleichzeitig in dem Analysegerät prozessiert werden. Auch Aufnahmevorrichtungen, die einer Messstation, beispielsweise einem Photometer, oder einem Vorratsbehälter für Reagenzflüssigkeitsbehälter zugeordnet sind, sind üblicherweise so ausgestaltet, dass sie eine Vielzahl von Flüssigkeitsbehältern aufnehmen können.

WO 99/42841 A1 offenbart einen automatischen Analysator von besonderem Interesse und umfassend eine bewegbare Aufnahmevorrichtung, an der eine von mehreren Positionen für einen Flüssigkeitsbehälter angeordnet ist, und eine bewegbare Transportvorrichtung.

In der EP 2 755 036 A1 ist eine beispielhafte Aufnahmevorrichtung mit einer Vielzahl von Aufnahmepositionen für Reaktionsgefäße (Küvetten) beschrieben. Die Aufnahmevorrichtung umfasst eine drehbare, kreisringförmige Basisplatte, auf der eine Vielzahl von Küvettenhalterungen angeordnet ist. Die Bestückung mit Küvetten erfolgt, indem durch Drehen der Basisplatte jeweils eine leere Halterung in einer vorgegebenen Bestückungsposition positioniert wird, in der dann mit Hilfe einer automatischen Vorrichtung zum Transport von Küvetten eine einzelne Küvette in die leere Halterung eingesetzt wird. Die in der Aufnahmevorrichtung gehaltenen Küvetten werden dann mit Hilfe automatischer Pipettiervorrichtungen mit Proben- und Reagenzflüssigkeiten befüllt, und die so hergestellten Reaktionsansätze werden für eine eventuell erforderliche Inkubationsdauer gelagert, bis der Weitertransport in eine Messstation erfolgen kann.

In der EP 2 998 744 A1 ist eine andere Aufnahmevorrichtung mit einer Vielzahl von Aufnahmepositionen für Reaktionsgefäße (Küvetten) beschrieben. Die Aufnahmevorrichtung umfasst einen entlang einer horizontalen Achse bewegbaren Block, in dem eine Vielzahl von Vertiefungen für die Aufnahme jeweils einer Küvette angeordnet ist. Diese Aufnahmevorrichtung ist ausschließlich für die Zwischenlagerung von Küvetten vorgesehen, die bereits fertige Reaktionsansätze enthalten. Die Bestückung mit befüllten Küvetten erfolgt, indem durch eine lineare Bewegung des Blocks jeweils eine leere Vertiefung in einer vorgegebenen Bestückungsposition positioniert wird, in der dann mit Hilfe einer automatischen Vorrichtung zum Transport von Küvetten eine einzelne Küvette in die leere Vertiefung eingesetzt wird.

In der EP 2 730 927 A1 ist ein Vorratsbehälter für Reagenzflüssigkeitsbehälter beschrieben, bei dem die Aufnahmevorrichtung eine Vielzahl von Aufnahmepositionen für Reagenzflüssigkeitsbehälter aufweist. Die Aufnahmevorrichtung umfasst ähnlich der weiter oben beschriebenen Aufnahmevorrichtung für Küvetten eine drehbare, kreisringförmige Basisplatte, auf der eine Vielzahl von Halterungen für die Flüssigkeitsbehälter in mehreren konzentrischen Kreisen angeordnet ist. Die Bestückung mit Reagenzflüssigkeitsbehältern erfolgt, indem durch Drehen der Basisplatte jeweils eine leere Halterung in einer vorgegebenen Bestückungsposition positioniert wird, in der dann mit Hilfe einer automatischen Vorrichtung zum Transport von Reagenzflüssigkeitsbehältern ein einzelner Reagenzflüssigkeitsbehälter in die leere Halterung eingesetzt wird. Aus den in der Aufnahmevorrichtung gehaltenen Reagenzflüssigkeitsbehältern kann dann mittels automatischer Pipettiervorrichtungen Reagenzflüssigkeit entnommen werden.

In der EP 2 309 251 A1 ist eine photometrische Messstation mit einer stationären, kreisringförmigen Aufnahmevorrichtung mit einer Vielzahl von Aufnahmepositionen für Reaktionsgefäße (Küvetten) beschrieben. Diese Aufnahmevorrichtung ist für die Lagerung von Küvetten vorgesehen, die zur photometrischen Analyse vorgesehene Reaktionsansätze enthalten. Die Bestückung mit befüllten Küvetten erfolgt, indem mit einer automatischen Vorrichtung zum Transport von Küvetten gezielt eine leere Aufnahmeposition angefahren wird und eine einzelne Küvette in die leere Vertiefung eingesetzt wird.

Die Reihenfolge, in der bislang leere Aufnahmepositionen von Aufnahmevorrichtungen der beschriebenen Art sukzessive mit Flüssigkeitsbehältern automatisiert beladen werden, erfolgt gemäß einer vorgegebenen, numerischen Reihenfolge der Aufnahmepositionen. Jeder Aufnahmeposition ist eine Nummer als Identifikator zugewiesen, wobei benachbarte Aufnahmepositionen typischerweise von 0 oder von 1 bis X der Reihe nach durchnummeriert werden. Im Fall von kreisförmigen Anordnungen kann die Nummerierung im oder entgegen dem Uhrzeigersinn erfolgen. Im Fall von mehreren nebeneinander angeordneten Reihen von Aufnahmepositionen kann die Nummerierung in der ersten Reihe von links nach rechts erfolgen und in der darunter angeordneten Reihe weiterführend von rechts nach links erfolgen.

Problematisch dabei ist, dass während des Betriebes des automatischen Analysegeräts die Flüssigkeitsbehälter, die sukzessive in numerischer Reihenfolge in den Aufnahmepositionen einer Aufnahmevorrichtung platziert wurden, nicht in derselben Reihenfolge wieder entnommen werden, weil beispielsweise für Reaktionsansätze in benachbarten Reaktionsgefäßen unterschiedliche Inkubationszeiten erforderlich sind oder weil Behälter, die häufiger verwendete Reagenzflüssigkeiten enthalten früher ausgetauscht werden müssen als benachbarte Behälter, die eine weniger häufig benötigte Reagenzflüssigkeit enthalten. Im Laufe des Betriebs entstehen also leere Aufnahmepositionen zwischen besetzten Aufnahmepositionen. Die Bestückung dieser freigewordenen, leeren Aufnahmepositionen erfolgt im Stand der Technik immer gemäß der vorgegebenen Nummerierung der Aufnahmepositionen, wobei für einen Bestückungsvorgang immer die Aufnahmeposition ausgewählt wird, die numerisch auf die in dem unmittelbar vorangegangenen Bestückungsvorgang bestückte Aufnahmeposition folgt.

Allerdings ist die Bestückung der Aufnahmevorrichtung mit Flüssigkeitsbehältern nicht der einzige Vorgang, bei dem die Position einer Aufnahmeposition und die Position einer darauf zugreifenden Komponente, wie beispielsweise eines Küvettengreifers, aufeinander abgestimmt werden müssen. Auch die Entnahme von Flüssigkeitsbehältern oder die Abgabe oder Entnahme einer Proben- oder Reagenzflüssigkeit mittels einer automatischen Pipettiervorrichtung erfordert eine korrekte Positionierung eines Flüssigkeitsbehälters relativ zur zugreifenden Komponente.

Aus diesen Gründen ist die Auswahl einer leeren Aufnahmeposition für den nächsten Bestückungsvorgang anhand ihrer Nummer nicht immer vorteilhaft, weil sich diese Aufnahmeposition weiter entfernt von der Bestückungsposition befinden kann als eine weitere zur Verfügung stehende leere Aufnahmeposition. Der Transport einer von der Bestückungsposition weit entfernten Aufnahmeposition nimmt Zeit in Anspruch, die die durchschnittliche Dauer der Durchführung einer Analyse beeinflusst und damit den Durchsatz des automatischen Analysegeräts vermindert.

Die der Erfindung zugrundeliegende Aufgabe bestand also darin, ein verbessertes Verfahren zur Bestückung von Aufnahmevorrichtungen mit Flüssigkeitsbehältern bereit zu stellen, das die durchschnittliche Dauer der Durchführung einer Analyse verkürzt und damit den Durchsatz eines automatischen Analysegeräts erhöht.

In Bezug auf eine bewegbare Aufnahmevorrichtung, die in eine Bestückungsstellung gebracht werden muss, um eine leere Aufnahmeposition in einer vorgegebenen Bestückungsposition zu positionieren, wird die Aufgabe erfindungsgemäß dadurch gelöst, dass die Reihenfolge, in der die leeren Aufnahmepositionen in der Bestückungsposition positioniert werden, so gewählt wird, dass die Bewegung der Aufnahmevorrichtung zur Positionierung einer leeren Aufnahmeposition in der Bestückungsposition immer minimal ist.

Gegenstand der vorliegenden Erfindung ist damit ein Verfahren zur sukzessiven Bestückung einer Vielzahl von an einer bewegbaren Aufnahmevorrichtung angeordneten Aufnahmepositionen mit Flüssigkeitsbehältern, wobei durch wiederholte Bewegung der Aufnahmevorrichtung jeweils eine leere Aufnahmeposition in einer vorgegebenen Bestückungsposition positioniert wird und in der Bestückungsposition dann jeweils ein Flüssigkeitsbehälter in die leere Aufnahmeposition eingesetzt wird. Die Reihenfolge, in der die leeren Aufnahmepositionen in der Bestückungsposition positioniert werden, wird so gewählt, dass die Bewegung der Aufnahmevorrichtung zur Positionierung einer leeren Aufnahmeposition in der Bestückungsposition immer minimal ist.

Die Aufnahmevorrichtung kann um eine vertikale oder eine horizontale Achse drehbar sein. In diesem Fall wird die Reihenfolge, in der die leeren Aufnahmepositionen in der Bestückungsposition positioniert werden, so gewählt, dass jeweils die leere Aufnahmeposition, die auf dem kreisbogenförmigen Transportweg den kürzesten Abstand zur Bestückungsposition aufweist, als nächstes zur Bestückungsposition bewegt wird. Auf diese Weise ist sichergestellt, dass die Drehbewegung der Aufnahmevorrichtung zur Positionierung einer leeren Aufnahmeposition in der Bestückungsposition minimal ist.

Vorzugsweise sind die Aufnahmepositionen einer drehbaren Aufnahmevorrichtung kreisbogenförmig an der Aufnahmevorrichtung angeordnet.

Alternativ kann die Aufnahmevorrichtung in horizontaler Ebene entlang mindestens einer Raumrichtung X, vorzugsweise zusätzlich entlang einer zweiten Raumrichtung Z, die senkrecht zur Raumrichtung X verläuft, bewegbar sein. In diesem Fall wird die Reihenfolge, in der die leeren Aufnahmepositionen in der Bestückungsposition positioniert werden, so gewählt, dass jeweils die leere Aufnahmeposition, die auf dem linearen Transportweg, der aus dem Transportweg in Raumrichtung X besteht oder der sich gegebenenfalls aus der Summe des Transportwegs in Raumrichtung X und des Transportwegs in Raumrichtung Z zusammensetzt, den kürzesten Abstand zur Bestückungsposition aufweist, als nächstes zur Bestückungsposition bewegt wird. Auf diese Weise ist sichergestellt, dass die Bewegung der Aufnahmevorrichtung zur Positionierung einer leeren Aufnahmeposition in der Bestückungsposition minimal ist.

Die Bestückung der Aufnahmevorrichtung mit Flüssigkeitsbehältern erfolgt vorzugsweise mit Hilfe einer verfahrbaren Transporteinrichtung. Dadurch dass die Aufnahmevorrichtung in eine Bestückungsstellung bewegbar ist, ist es ausreichend, wenn die Transporteinrichtung vertikal und horizontal entlang einer einzigen Raumrichtung verfahrbar ist zwischen einer vorgegebenen Aufnahmeposition für einen Flüssigkeitsbehälter außerhalb der Aufnahmevorrichtung und einer vorgegebenen Bestückungsposition in Bezug auf die Aufnahmevorrichtung. Nichtsdestotrotz kann die Transporteinrichtung natürlich zusätzlich auch horizontal entlang einer weiteren Raumrichtung verfahrbar sein, die senkrecht zur ersten Raumrichtung verläuft.

In Bezug auf eine stationäre, also nicht wie beansprucht bewegbare Aufnahmevorrichtung, in die Flüssigkeitsbehälter mittels einer Transportvorrichtung von einer Startposition außerhalb der Aufnahmevorrichtung in eine leere Aufnahmeposition der Aufnahmevorrichtung transferiert werden, wird die Aufgabe, nicht gemäß der Ansprüche, dadurch gelöst, dass die Reihenfolge der leeren Aufnahmepositionen, in die die Transportvorrichtung die Flüssigkeitsbehälter nacheinander transferiert, so gewählt wird, dass der Transportweg von der Startposition zu einer leeren Aufnahmeposition immer minimal ist.

Ein weiterer Gegenstand der nicht den Ansprüchen entspricht ist damit ein Verfahren zur sukzessiven Bestückung einer Vielzahl von an einer stationären Aufnahmevorrichtung angeordneten Aufnahmepositionen mit Flüssigkeitsbehältern, wobei jeweils ein Flüssigkeitsbehälter mittels einer Transportvorrichtung von einer Startposition außerhalb der Aufnahmevorrichtung in eine leere Aufnahmeposition der Aufnahmevorrichtung transferiert wird. Die Reihenfolge der leeren Aufnahmepositionen, in die die Transportvorrichtung die Flüssigkeitsbehälter nacheinander transferiert, wird so gewählt, dass der Transportweg von der Startposition zu einer leeren Aufnahmeposition immer minimal ist.

In diesem Fall wird die Reihenfolge, in der die Transportvorrichtung die leeren Aufnahmepositionen anfährt, um Flüssigkeitsbehälter darin abzusetzen, so gewählt, dass der Verfahrweg der Transportvorrichtung zwischen der Startposition außerhalb der Aufnahmevorrichtung, aus der ein zu transferierender Flüssigkeitsbehälter entnommen wird, und der leeren Aufnahmeposition, in die der Flüssigkeitsbehälter eingesetzt werden soll, der kürzestmögliche Weg ist. Typischerweise wird eine Transporteinrichtung zur Bestückung einer stationären Aufnahmevorrichtung vertikal und horizontal entlang zweier senkrecht zueinander verlaufender Raumrichtungen verfahrbar sein, weil typische Aufnahmevorrichtungen so ausgestaltet sind, dass die Aufnahmepositionen in zweidimensionaler Struktur angeordnet sind. Der kürzestmögliche Verfahrweg setzt sich dann aus der Summe der Verfahrwege entlang der beiden senkrecht zueinander verlaufenden Raumrichtungen zusammen.

Es ist natürlich auch der Fall denkbar, dass eine stationäre Aufnahmevorrichtung vorgesehen ist, die nur eine einzige, geradlinige Reihe von Aufnahmepositionen aufweist. In diesem Fall wäre auch eine Transporteinrichtung ausreichend, die vertikal und horizontal entlang der Reihe von Aufnahmepositionen verfahrbar ist. Der kürzestmögliche Verfahrweg entspricht dann der kürzesten Entfernung zwischen der Startposition außerhalb der Aufnahmevorrichtung und einer leeren Aufnahmeposition der Aufnahmevorrichtung.

Ein weiterer Gegenstand der vorliegenden Erfindung ist ein automatisches Analysegerät umfassend eine bewegbare 30 Aufnahmevorrichtung, an der eine Vielzahl von Aufnahmepositionen für jeweils einen Flüssigkeitsbehälter angeordnet sind, eine verfahrbare Transporteinrichtung zum Transport jeweils eines Flüssigkeitsbehälters und eine Steuereinrichtung, wobei die Steuereinrichtung so konfiguriert ist, dass sie ein weiter oben beschriebenes Verfahren zur sukzessiven Bestückung der an der Aufnahmevorrichtung angeordneten Aufnahmepositionen mit Flüssigkeitsbehältern steuert.

Bei der Aufnahmevorrichtung kann es sich um eine temperierte Inkubationseinrichtung mit Aufnahmepositionen für Reaktionsgefäße (vorzugsweise in Form von transparenten, röhrchenförmigen Küvetten) handeln.

Alternativ kann die Aufnahmevorrichtung Aufnahmepositionen für Reagenzflüssigkeitsbehälter aufweisen und Teil eines Vorratsbehälters für Reagenzflüssigkeitsbehälter sein. Reagenzflüssigkeitsbehälter können sehr unterschiedliche Formen aufweisen. Ein Reagenzflüssigkeitsbehälter enthält mindestens eine Flüssigkeit, die ein oder mehrere Substanzen zum Nachweis eines oder mehrerer Analyten enthält, wie z.B. Antikörperlösungen, Farbstofflösungen etc. Ein Reagenzflüssigkeitsbehälter kann ferner mehrkammrig ausgestaltet sein und mehrere, verschiedene Reagenzflüssigkeiten enthalten.

Die Aufnahmevorrichtung kann ferner Teil einer photometrischen Messstation sein. In diesem Fall umfasst die Aufnahmevorrichtung Aufnahmepositionen für Reaktionsgefäße oder Messzellen (vorzugsweise in Form von transparenten, röhrchenförmigen Küvetten).

Die Vorrichtung zum Transport eines Flüssigkeitsbehälters von einer ersten Aufnahmeposition in eine zweite Aufnahmeposition ist vorzugsweise ein an einem horizontal und vertikal verfahrbaren oder schwenkbaren Transferarm befestigter Greifer, der dazu ausgebildet ist, einen Flüssigkeitsbehälter aus einer Aufnahmeposition senkrecht nach oben zu heben oder ihn senkrecht von oben darin abzusetzen. Dazu kann der Greifer zum Beispiel an einer vertikal verfahrbaren Aufhängung befestigt sein, die wiederum an einer Schiene angeordnet ist, entlang der die Aufhängung horizontal verfahrbar ist. Alternativ kann sich der Greifer auch an einem dreidimensional bewegbaren Roboterarm befinden.

Der Greifer kann Teil eines mechanischen, magnetischen, pneumatischen oder adhäsiven Greifsystems sein. Ein mechanischer Greifer kann als Einfinger-, Zweifinger- oder Mehrfingergreifer ausgestaltet sein, und er kann starr, gelenkig oder elastisch ausgeführt sein. Bevorzugterweise handelt es sich bei dem Greifer um einen passiven Klemmgreifer zum kraftschlüssigen Erfassen und Halten eines Flüssigkeitsbehälters. Dieser kann einstückig und elastisch verformbar ausgestaltet sein. Der Greifer befindet sich vorzugsweise in einem Spannungszustand, so dass es, wenn er mit ausreichender Kraft gegen einen Flüssigkeitsbehälter gedrückt wird, zu einem Schnappeffekt kommt, und der Greifer sich öffnet und den Flüssigkeitsbehälter umgreift und festhält. Umgekehrt öffnet sich der Greifer erst wieder und gibt den Flüssigkeitsbehälter frei, wenn der Greifer mit ausreichender Kraft von einem fixierten Flüssigkeitsbehälter wegbewegt wird.

Ein anspruchsgemäßes automatisches Analysegerät umfasst eine bewegbare Aufnahmevorrichtung, an der eine Vielzahl von Aufnahmepositionen für jeweils einen Flüssigkeitsbehälter angeordnet sind, eine verfahrbare Transporteinrichtung zum Transport jeweils eines Flüssigkeitsbehälters und eine Steuereinrichtung, wobei die Steuereinrichtung so konfiguriert ist, dass sie ein Verfahren zur sukzessiven Bestückung der an der bewegbaren Aufnahmevorrichtung angeordneten Aufnahmepositionen mit Flüssigkeitsbehältern mit den folgenden Schritten steuert:
- Positionieren einer leeren Aufnahmeposition in einer vorgegebenen Bestückungsposition durch wiederholtes Bewegen der Aufnahmevorrichtung;
- Einsetzen jeweils eines Flüssigkeitsbehälters in eine leere Aufnahmeposition, die sich in der Bestückungsposition befindet, mittels der verfahrbaren Transporteinrichtung;
wobei die Reihenfolge, in der die leeren Aufnahmepositionen in der Bestückungsposition positioniert werden, so gewählt wird, dass die Bewegung der Aufnahmevorrichtung zur Positionierung einer leeren Aufnahmeposition in der Bestückungsposition immer minimal ist.

Die Aufnahmevorrichtung kann um eine vertikale oder eine horizontale Achse drehbar sein. In diesem Fall wird die Reihenfolge, in der die leeren Aufnahmepositionen in der Bestückungsposition positioniert werden, so gewählt, dass jeweils die leere Aufnahmeposition, die auf dem kreisbogenförmigen Transportweg den kürzesten Abstand zur Bestückungsposition aufweist, als nächstes zur Bestückungsposition bewegt wird. Auf diese Weise ist sichergestellt, dass die Drehbewegung der Aufnahmevorrichtung zur Positionierung einer leeren Aufnahmeposition in der Bestückungsposition minimal ist.

Vorzugsweise sind die Aufnahmepositionen einer drehbaren Aufnahmevorrichtung kreisbogenförmig an der Aufnahmevorrichtung angeordnet.

Alternativ kann die Aufnahmevorrichtung in horizontaler Ebene entlang mindestens einer Raumrichtung X, vorzugsweise zusätzlich entlang einer zweiten Raumrichtung Z, die senkrecht zur Raumrichtung X verläuft, bewegbar sein. In diesem Fall wird die Reihenfolge, in der die leeren Aufnahmepositionen in der Bestückungsposition positioniert werden, so gewählt, dass jeweils die leere Aufnahmeposition, die auf dem linearen Transportweg, der aus dem Transportweg in Raumrichtung X besteht oder der sich gegebenenfalls aus der Summe des Transportwegs in Raumrichtung X und des Transportwegs in Raumrichtung Z zusammensetzt, den kürzesten Abstand zur Bestückungsposition aufweist, als nächstes zur Bestückungsposition bewegt wird. Auf diese Weise ist sichergestellt, dass die Bewegung der Aufnahmevorrichtung zur Positionierung einer leeren Aufnahmeposition in der Bestückungsposition minimal ist.

Die Bestückung der Aufnahmevorrichtung mit Flüssigkeitsbehältern erfolgt mit Hilfe der verfahrbaren Transporteinrichtung. Dadurch dass die Aufnahmevorrichtung in eine Bestückungsstellung bewegbar ist, ist es ausreichend, wenn die Transporteinrichtung vertikal und horizontal entlang einer einzigen Raumrichtung verfahrbar ist zwischen einer vorgegebenen Aufnahmeposition für einen Flüssigkeitsbehälter außerhalb der Aufnahmevorrichtung und einer vorgegebenen Bestückungsposition in Bezug auf die Aufnahmevorrichtung. Nichtsdestotrotz kann die Transporteinrichtung natürlich zusätzlich auch horizontal entlang einer weiteren Raumrichtung verfahrbar sein, die senkrecht zur ersten Raumrichtung verläuft.

In einer anderen Ausführungsform umfasst ein nicht anspruchsgemäßes automatisches Analysegerät eine stationäre Aufnahmevorrichtung, an der eine Vielzahl von Aufnahmepositionen für jeweils einen Flüssigkeitsbehälter angeordnet sind, eine verfahrbare Transporteinrichtung zum Transfer jeweils eines Flüssigkeitsbehälters von einer Startposition außerhalb der Aufnahmevorrichtung in eine leere Aufnahmeposition der Aufnahmevorrichtung und eine Steuereinrichtung, wobei die Steuereinrichtung so konfiguriert ist, dass sie ein Verfahren zur sukzessiven Bestückung der an der stationären Aufnahmevorrichtung angeordneten Aufnahmepositionen mit Flüssigkeitsbehältern mit den folgenden Schritten steuert:
- Entnahme eines Flüssigkeitsbehälters aus einer Startposition mittels der verfahrbaren Transporteinrichtung;
- Transfer des Flüssigkeitsbehälters in eine leere Aufnahmeposition der Aufnahmevorrichtung mittels der verfahrbaren Transporteinrichtung;
wobei die Reihenfolge der leeren Aufnahmepositionen, in die die Transportvorrichtung die Flüssigkeitsbehälter nacheinander transferiert, so gewählt wird, dass der Transportweg von der Startposition zu einer leeren Aufnahmeposition immer minimal ist.

In diesem Fall wird die Reihenfolge, in der die Transportvorrichtung die leeren Aufnahmepositionen anfährt, um Flüssigkeitsbehälter darin abzusetzen, so gewählt, dass der Verfahrweg der Transportvorrichtung zwischen der Startposition außerhalb der Aufnahmevorrichtung, aus der ein zu transferierender Flüssigkeitsbehälter entnommen wird, und der leeren Aufnahmeposition, in die der Flüssigkeitsbehälter eingesetzt werden soll, der kürzestmögliche Weg ist.

Typischerweise wird die Transporteinrichtung zur Bestückung einer stationären Aufnahmevorrichtung vertikal und horizontal entlang zweier senkrecht zueinander verlaufender Raumrichtungen verfahrbar sein, weil typische Aufnahmevorrichtungen so ausgestaltet sind, dass die Aufnahmepositionen in zweidimensionaler Struktur angeordnet sind. Der kürzestmögliche Verfahrweg setzt sich dann aus der Summe der Verfahrwege entlang der beiden senkrecht zueinander verlaufenden Raumrichtungen zusammen.

Es kann auch eine stationäre Aufnahmevorrichtung vorgesehen sein, die nur eine einzige, geradlinige Reihe von Aufnahmepositionen aufweist. In diesem Fall wäre auch eine Transporteinrichtung ausreichend, die vertikal und horizontal entlang der Reihe von Aufnahmepositionen verfahrbar ist. Der kürzestmögliche Verfahrweg entspricht dann der kürzesten Entfernung zwischen der Startposition außerhalb der Aufnahmevorrichtung und einer leeren Aufnahmeposition der Aufnahmevorrichtung.

Die mit der Erfindung erzielten Vorteile bestehen insbesondere darin, dass die durchschnittliche Dauer der Durchführung einer Analyse verkürzt und damit der Durchsatz eines automatischen Analysegeräts erhöht wird. Durch die Verkürzung von Transportwegen wird weiterhin der Verschleiß von mechanischen Bauteilen verringert, wodurch sich der Wartungsaufwand für das Analysegerät verringert, und es wird der Energieverbrauch des Analysegeräts gesenkt.

Die Erfindung wird im Folgenden anhand einer Zeichnung erläutert. Darin zeigen
- FIG. 1: ein erfindungsgemäßes automatisches Analysegerät;
- FIG. 2: eine drehbare Inkubationseinrichtung für Reaktionsgefäße.

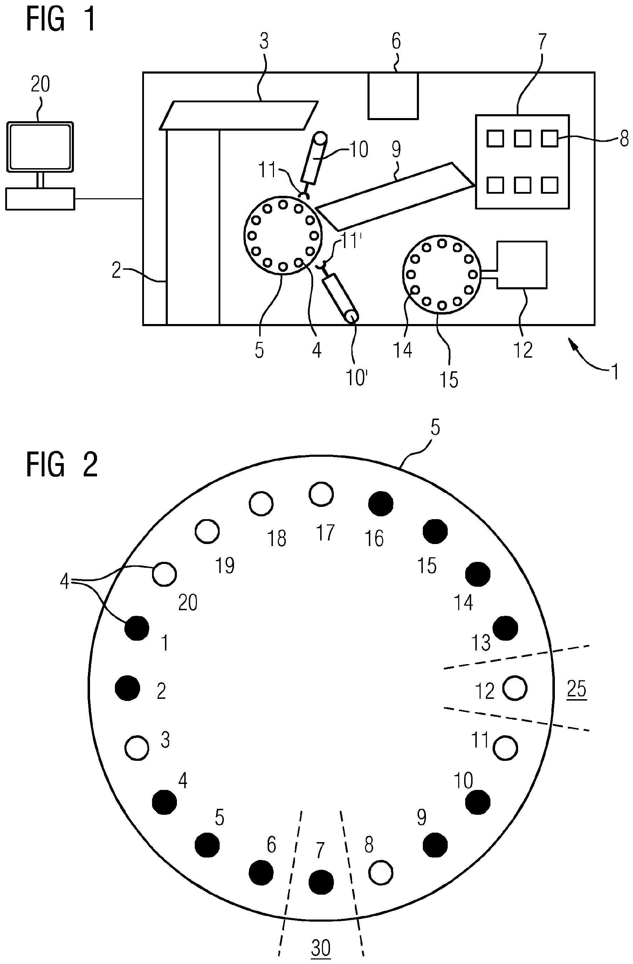

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 in Primärprobengefäßen auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden mit einem ersten Transferarm 10 mit einem Klemmgreifer 11 aus einem Küvettenvorratsbehälter 6 entnommen. In dem auf ca. 8-10 °C gekühlten Reagenzgefäßvorratsbehälter 7 werden Reagenzflüssigkeitsbehälter 8 mit verschiedenen Reagenzflüssigkeiten aufbewahrt. Reagenzflüssigkeit wird mittels der Pipettiernadel einer zweiten Pipettiervorrichtung 9 aus einem Reagenzflüssigkeitsbehälter 8 entnommen und zur Bereitstellung eines Reaktionsansatzes in eine Küvette, die bereits ein Probenaliquot enthält, abgegeben. Die Küvette mit dem Reaktionsansatz wird von einem zweiten Transferarm 10' mit einem Klemmgreifer 11' aus einer Aufnahmeposition 4 der Inkubationseinrichtung 5 entnommen und in eine Aufnahmeposition 14 der stationären Aufnahmevorrichtung 15 für die photometrische Messstation 12 transportiert, wo die Extinktion des Reaktionsansatzes gemessen wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 ist eine schematische Darstellung der drehbaren Inkubationseinrichtung 5 aus FIG. 1 mit 20 Aufnahmepositionen 4 für Küvetten. Mit Küvetten besetzte Aufnahmepositionen 4 sind als schwarz gefüllte Kreise dargestellt; leere Aufnahmepositionen 4 sind als ungefüllte Kreise dargestellt.

Dargestellt ist eine Momentaufnahme während des Betriebs des automatischen Analysegeräts. Im zuletzt durchgeführten Verfahrensschritt wurde eine Küvette von einem nicht näher dargestellten Greifer aus der Aufnahmeposition 4 mit der Nummer 12 entnommen, die zuvor durch Drehung der Aufnahmevorrichtung 5 in der Entnahmeposition 25 positioniert worden war. Der nächste geplante Schritt ist die Bestückung der Aufnahmevorrichtung 5 mit einer weiteren Küvette.

Gemäß der bisherigen Methode aus dem Stand der Technik würde nun zunächst geprüft werden, welche Aufnahmeposition 4 zuletzt bestückt worden war. Im vorliegenden Fall war beim letzten Bestückungsvorgang eine Küvette in die Aufnahmeposition 4 mit der Nummer 16 eingesetzt worden. Demzufolge würde nun die nächste numerisch folgende und leere Aufnahmeposition 4, also die Aufnahmeposition 4 mit der Nummer 17 als Zielposition für die neue Küvette ausgewählt werden. Die Aufnahmevorrichtung 5 müsste um etwa 180 ° gedreht werden, damit die Aufnahmeposition 4 mit der Nummer 17 in der Bestückungsposition 30 positioniert wird.

Gemäß der erfindungsgemäßen Methode wird stattdessen geprüft, welche leere Aufnahmeposition 4 auf dem kreisbogenförmigen Transportweg den kürzesten Abstand zur Bestückungsposition 30 aufweist. Die nächstgelegene leere Aufnahmeposition 4 ist die Aufnahmeposition 4 mit der Nummer 8. Die Aufnahmevorrichtung 5 muss um nur etwa 20 ° gedreht werden, damit die Aufnahmeposition 4 mit der Nummer 8 in der Bestückungsposition 30 positioniert wird.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzflüssigkeitsbehälter
- 9: Pipettiervorrichtung
- 10, 10`: Transferarm
- 11, 11`: Klemmgreifer
- 12: Messstation
- 14: Aufnahmeposition
- 15: Aufnahmevorrichtung
- 20: Steuereinheit

- 25: Entnahmeposition
- 30: Bestückungsposition

## Patentansprüche

1. Verfahren zur sukzessiven Bestückung einer Vielzahl von an einer bewegbaren Aufnahmevorrichtung (5) angeordneten Aufnahmepositionen (4) mit Flüssigkeitsbehältern, wobei durch wiederholte Bewegungen der Aufnahmevorrichtung (5) jeweils eine leere Aufnahmeposition (4) in einer vorgegebenen Bestückungsposition (30) positioniert wird und in der Bestückungsposition (30) dann jeweils ein Flüssigkeitsbehälter in die leere Aufnahmeposition (4) eingesetzt wird,
**dadurch gekennzeichnet,**
**dass** die Reihenfolge, in der die leeren Aufnahmepositionen (4) in der Bestückungsposition (30) positioniert werden, so gewählt wird, dass die Bewegung der Aufnahmevorrichtung (5) zur Positionierung einer leeren Aufnahmeposition (4) in der Bestückungsposition (30) immer minimal ist.

2. Verfahren gemäß Anspruch 1, wobei die Aufnahmevorrichtung (5) um eine vertikale oder eine horizontale Achse drehbar ist.

3. Verfahren gemäß Anspruch 2, wobei die Aufnahmepositionen (4) kreisbogenförmig an der drehbaren Aufnahmevorrichtung (5) angeordnet sind.

4. Verfahren gemäß einem der vorhergehenden Ansprüche, wobei die Bestückung mit einer verfahrbaren Transporteinrichtung erfolgt.

5. Automatisches Analysegerät (1) umfassend eine bewegbare Aufnahmevorrichtung (5), an der eine Vielzahl von Aufnahmepositionen (4) für jeweils einen Flüssigkeitsbehälter angeordnet sind, eine verfahrbare Transporteinrichtung zum Transport jeweils eines Flüssigkeitsbehälters und eine Steuereinrichtung, wobei die Steuereinrichtung so konfiguriert ist, dass sie ein Verfahren zur sukzessiven Bestückung der an der bewegbaren Aufnahmevorrichtung (5) angeordneten Aufnahmepositionen (4) mit Flüssigkeitsbehältern mit den folgenden Schritten steuert:
• Positionieren einer leeren Aufnahmeposition (4) in einer vorgegebenen Bestückungsposition (30) durch wiederholtes Bewegen der Aufnahmevorrichtung (5);
• Einsetzen jeweils eines Flüssigkeitsbehälters in eine leere Aufnahmeposition (4), die sich in der Bestückungsposition (30) befindet, mittels der verfahrbaren Transporteinrichtung;
**dadurch gekennzeichnet,**
**dass** die Reihenfolge, in der die leeren Aufnahmepositionen (4) in der Bestückungsposition (30) positioniert werden, so gewählt wird, dass die Bewegung der Aufnahmevorrichtung (5) zur Positionierung einer leeren Aufnahmeposition (4) in der Bestückungsposition (30) immer minimal ist.

6. Automatisches Analysegerät (1) gemäß Anspruch 5, wobei die Aufnahmevorrichtung (5) um eine vertikale oder horizontale Achse drehbar ist.

7. Automatisches Analysegerät (1) gemäß einem der Ansprüche 5 und 6, wobei die Aufnahmepositionen (4, 14) kreisbogenförmig an der Aufnahmevorrichtung (5, 15) angeordnet sind.

8. Automatisches Analysegerät (1) gemäß einem der Ansprüche 5, 6 und 7, wobei die Aufnahmevorrichtung (5) eine temperierte Inkubationseinrichtung (5) mit Aufnahmepositionen (4) für Reaktionsgefäße ist.

9. Automatisches Analysegerät (1) gemäß einem der Ansprüche 5, 6, 7 und 8, wobei die Aufnahmevorrichtung (15) Teil einer photometrischen Messstation (12) ist.

10. Automatisches Analysegerät (1) gemäß einem der Ansprüche 5, 6 und 7, wobei die Aufnahmevorrichtung Teil eines Vorratsbehälters für Reagenzflüssigkeitsbehälter ist.

## Claims

1. Method for successively loading a plurality of receiving positions (4), arranged on a movable receiving device (5), with liquid containers, wherein an empty receiving position (4) is in each case positioned in a predetermined loading position (30) by repeated movements of the receiving device (5) and, in the loading position (30), a liquid container is then inserted in each case into the empty receiving position (4),
**characterized in that**
the order in which the empty receiving positions (4) are positioned in the loading position (30) is chosen such that the movement of the receiving device (5) for positioning an empty receiving position (4) in the loading position (30) is always minimal.

2. Method according to Claim 1, wherein the receiving device (5) is rotatable about a vertical or a horizontal axis.

3. Method according to Claim 2, wherein the receiving positions (4) are arranged in a circular arc shape on the rotatable receiving device (5).

4. Method according to one of the preceding claims, wherein the loading takes place with a movable transport device.

5. Automatic analysis appliance (1) comprising a movable receiving device (5) on which a plurality of receiving positions (4) each for a liquid container are arranged, a movable transport device for transporting a liquid container, and a control device, wherein the control device is configured such that it controls a method for successively loading the receiving positions (4), arranged on the movable receiving device (5), with liquid containers, using the following steps:
• positioning an empty receiving position (4) in a predetermined loading position (30) by repeated movement of the receiving device (5);
• inserting a liquid container in each case into an empty receiving position (4), which is located in the loading position (30), by means of the movable transport device;
**characterized in that**
the order in which the empty receiving positions (4) are positioned in the loading position (30) is chosen such that the movement of the receiving device (5) for positioning an empty receiving position (4) in the loading position (30) is always minimal.

6. Automatic analysis appliance (1) according to Claim 5, wherein the receiving device (5) is rotatable about a vertical or horizontal axis.

7. Automatic analysis appliance (1) according to either of Claims 5 and 6, wherein the receiving positions (4, 14) are arranged in a circular arc shape on the receiving device (5, 15) .

8. Automatic analysis appliance (1) according to one of Claims 5, 6 and 7, wherein the receiving device (5) is a temperature-controlled incubation device (5) with receiving positions (4) for reaction vessels.

9. Automatic analysis appliance (1) according to one of Claims 5, 6, 7 and 8, wherein the receiving device (15) is part of a photometric measuring station (12).

10. Automatic analysis appliance (1) according to one of Claims 5, 6 and 7, wherein the receiving device is part of a storage container for reagent liquid vessels.

## Revendications

1. Procédé de garnissage successif d'une pluralité de positions (4) de réception, disposées sur un dispositif (5) de réception mobile, par des récipients à liquide, dans lequel par des déplacements répétés du dispositif (5) de réception on positionne respectivement une position (4) de réception vide en une position (30) de garnissage donnée à l'avance et dans la position (30) de garnissage, on insère alors respectivement un récipient à liquide dans la position (4) de réception vide,
**caractérisé**
**en ce que** dans la séquence, dans laquelle on positionne les positions (4) de réception vide dans la position (30) de garnissage, on fait en sorte que le déplacement du dispositif (5) de réception, pour le positionnement d'une position (4) de réception vide dans la position (30) de garnissage, soit toujours minimum.

2. Procédé suivant la revendication 1, dans lequel le dispositif (5) de réception est tournant autour d'un axe vertical ou d'un axe horizontal.

3. Procédé suivant la revendication 2, **caractérisé en ce que** les positions (4) de réception sont disposées en forme d'arc de cercle sur le dispositif (5) de réception tournant.

4. Procédé suivant l'une des revendications précédentes, dans lequel le garnissage s'effectue par un dispositif de transport, qui peut être déplacé.

5. Appareil (1) d'analyse automatique comprenant un dispositif (5) de réception mobile sur lequel sont disposées une pluralité de positions (4) de réception pour respectivement un récipient à liquide, un dispositif de transport pouvant être déplacé pour le transport respectivement d'un récipient à liquide et un dispositif de commande, dans lequel le dispositif de commande est configuré de manière à ce qu'il commande un procédé de garnissage successif des positions (4) de réception, disposées sur le dispositif (5) de réception mobile, par des récipients à liquide, par les stades suivants :
• positionnement d'une position (4) de réception vide dans une position (30) de garnissage donnée à l'avance par des déplacements répétés du dispositif (5) de réception ;
• insertion respectivement d'un récipient à liquide dans une position (4) de réception vide, qui se trouve dans la position (30) de garnissage au moyen du dispositif de transport pouvant être déplacé ;
**caractérisé**
**en ce que** l'on choisit dans la séquence, dans laquelle on positionne les positions (4) de réception vide dans la position (30) de garnissage, en sorte que le déplacement du dispositif (5) de réception, pour le positionnement d'une position (4) de réception vide dans la position (30) de garnissage, soit toujours minimum.

6. Appareil (1) d'analyse automatique suivant la revendication 5, dans lequel le dispositif (5) de réception est tournant autour d'un axe vertical ou d'un axe horizontal.

7. Appareil (1) d'analyse automatique suivant l'une des revendications 5 et 6, dans lequel les positions (4, 14) de réception sont disposées en forme d'arc de cercle sur le dispositif (5, 15) de réception.

8. Appareil (1) d'analyse automatique suivant l'une des revendications 5, 6 et 7, dans lequel le dispositif (5) de réception est un dispositif (5) d'incubation mis en température ayant des positions (4) de réception de récipients de réaction.

9. Appareil (1) d'analyse automatique suivant l'une des revendications 5, 6, 7 et 8, dans lequel le dispositif (15) de réception fait partie d'un poste (12) de mesure photométrique.

10. Appareil (1) d'analyse automatique suivant l'une des revendications 5, 6 et 7, dans lequel le dispositif de réception fait partie d'un réservoir pour des récipients de liquides réactifs.
